(19) Europäisches Patentamt

European Patent Office

Office européen des brevets

(11) **EP 1 362 979 A2**

(12) **EUROPEAN PATENT APPLICATION**

(43) Date of publication:
**19.11.2003 Bulletin 2003/47**

(21) Application number: **03011228.8**

(22) Date of filing: **16.05.2003**

(51) Int Cl.[7]: **E21B 47/022**, F16L 55/28, G01B 7/28, G01C 21/16, G01M 3/00

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **17.05.2002 JP 2002143102**
**19.03.2003 JP 2003075901**

(71) Applicant: **JFE Engineering Corporation Tokyo 100-0005 (JP)**

(72) Inventors:
- **Tezuka, Kouichi, Intel. Prop. Dpt, JFE Steel Corp. Tokyo 100-0011 (JP)**
- **Nagamune, Akio, c/o JFE R&D Corporation Kawasaki-shi, Kanagawa 210-0855 (JP)**
- **Fujisawa, Tomoji, c/o JFE Soldec Corporation Yokohama-shi, Kanagawa 230-0044 (JP)**

(74) Representative: **Grünecker, Kinkeldey, Stockmair & Schwanhäusser Anwaltssozietät Maximilianstrasse 58 80538 München (DE)**

(54) **Pig for measuring the shape of a pipeline**

(57)     The object of the invention is to measure, surely and in a stable condition, the orientation of a pig body in the pipe of a pipeline thereby to correct errors caused by measuring the linear shape of the pipeline by means of a gyroscope sensor. A three-axis gyroscope sensor unit 4 is placed in a pig body 2 such that one of measuring axes of the gyroscope sensor unit 4 is parallel to the center axis of the pig body 2 and is fixed so as to prevent the gyroscope sensor unit 4 from being shifted in position with respect to the pig body 2. Two sets of six distance measuring means 5-10 and 11-16 are arranged on the outer periphery of the pig body 2 at two positions in the back and forth direction (in a direction of travel) , respectively, and the six distance measuring means of each set are arranged at equal intervals in the circumferential direction of the pig body 2. Deviation between the center axis of the pig body 2 and the center axis of the pipeline is calculated from the outputs of the distance measuring means 5-10 and 11-16 and the output of the three-axis gyroscope sensor unit 4 is corrected based on the deviation. In this manner, errors caused by the orientation of the pig body 2 are corrected and hence the correct measurement of the linear shape of the pipeline can be performed.

*FIG. 1*

EP 1 362 979 A2

## Description

## Background of the Invention

### Field of the Invention

The present invention relates to an apparatus (commonly called "an inspection pig") that travels in a pipeline and inspects the inside of the pipeline and a method therefor. In particular, the invention relates to a pipeline shape measuring apparatus for measuring the construction shape and the cross-sectional shape of the pipeline with high accuracy and a method therefor.

### Description of the Related Art

In a long distance pipeline, there are cases where the pipeline subtly changes its position from the position where the pipeline was initially constructed, along with geographical changes and environmental changes after constructing the pipeline . In a short term, these small changes do not lead to the break or deterioration of the pipeline. However, in a long term, they apply an unnecessary stress on elements constituting the pipeline. Thus, it is very important for maintaining the pipeline to measure and grasp the linear shape (shape of a path of the center of a pipe constituting the pipeline). Moreover, in case that a disaster such as an earthquake or the like occurs, there is a possibility that the linear shape of the pipeline will be changed to the degree of a large amount. Therefore, also from this point of view, measuring the linear shape of the pipeline is very important.

It is comparatively easy to measure the linear shape of the pipeline, which is exposed at the surface of the earth. But, it is impossible to measure accurately the linear shape of the pipeline buried in the earth or in the bottom of a sea from the surface of the earth. Thus, developments have conventionally been made in a linear shape measuring technology, which utilizes an in-pipe inspection pig.

In case that the linear shape of the pipeline is measured by means of the in-pipe inspection pig, it is performed by measuring a change in the absolute position or in the relative position of a pig body when the pig body travels in the pipeline. However, since the pig body is placed in the pipe (metal pipe) of the pipeline, it is difficult to perform the measurement by detecting a signal from the outside (magnetism of the earth, electromagnetic signal and electromagnetic wave signal from the outside) and a self-contained position measuring system is required. On the contrary, developments have conventionally been made in the following method. That's to say, a gyroscope unit (pig body) is placed in the pipeline, to measure the orientation of the gyroscope unit, with respect to an earth coordinate system when the pig body travels, and the position of the pipeline with respect to the earth coordinate system is calculated by the traveling distance of the pig body and by the orientation of the gyroscope unit.

A mechanical gyroscope unit or an optical fiber gyroscope unit has been having a problem in the stability and in the accuracy of the gyroscope sensor itself. So, they cannot achieve the measurement of the linear shape of the pipeline with sufficiently high accuracy. However, the measurement of the linear shape has been achieved with sufficiently high accuracy by the use of a recently developed ring laser gyroscope (RLG).

In the measurement of the linear shape by the use of a conventional gyroscope, it is assumed that the pig body keeps a constant orientation with respect to the pipeline, that is, the direction of the pig body is always parallel to the center axis of the pipeline. Then, the linear shape of the pipeline is determined from the direction of the pig body with respect to the earth coordinate system determined from the measuring orientation of the gyroscope and the traveling distance of a roller type distance measuring unit the pig body measured by in contact with the inside surface of the pipeline.

However, when the pigbody actually travels in the pipeline , the orientation of the pig body with respect to the pipeline changes and in particular, temporarily changes to the degree of a large amount when the pig body passes over a bend, so that an error occurs in the calculation of the linear shape. The error in the measurement caused by the change in the position of the pig body invites a shift in direction in the later calculation of the linear shape and is accumulated and in particular, in measuring long distance, the accumulated errors become very large.

A correction to the accumulated errors is made, based on the known positions such as the starting point and the terminal position of the pig body. But in case those errors are caused in the correction range by a plurality of changes in the position of the pig body, it is difficult to correct accurately. Furthermore, in order to correct accurately, it is required to make a position correct at a plurality of positions. But in case of adapting to the pipelines buried in the ground or adapting to the bottom of the sea, it is difficult to make a position correct at a plurality of positions.

The error correcting methods include a method in which a gyroscope and an acceleration sensor are mounted and in which measurement results by the acceleration sensor are integrated to determine a travel distance in the coordinate system of the gyroscope (acceleration sensor) thereby to calculate the linear shape of the pipeline (position of the gyroscope). However, the pipeline inspecting pig usually produces complex motions such as vibration, rotation around an axis when it travels in the pipe. Therefore, in some case, it is impossible to calculate the linear shape of the pipeline with sufficiently high accuracy from the integration of the measured results by the acceleration sensor.

Furthermore, a method is considered to measure the orientation of the gyroscope (pig body) in the pipe of the pipeline, and to make a correction. That is, a method in which an optical wave distance measuring unit or an ultrasonic distance measuring unit is placed on the outer periphery of the pig body, in order to measure a distance to the inside surface of the pipe. In this way, measuring the orientation of the pig body in the pipe of the pipeline brings up a correction. However, the optical wave distance-measuring unit raises problems that it cannot be applied to a liquid pipeline for petroleum or the like. It cannot be used even for a gas pipeline, because it is soiled. Then, the ultrasonic distance-measuringunit raises a problem that it is difficult to measure the linear shape in a stable way and in an accurate way, because of a change in the speed of the sound or the like.

Still further, a method of measuring a distance by the use of a distance-measuring unit, so called an eddy current type, is also studied. However, the eddy current type distance measuring unit raises a problem that measured values are changed by variations in a positional relationship between the distance measuring unit and the peripheral metal (pipe). The unit raises a problem in the stability of the distance-measuring unit itself.

The present invention has been made in view of these circumstances described above. It is the object of the invention to provide an apparatus for measuring the shape of a pipeline, in which the orientation of a pig body in the pipe of the pipeline is measured surely and in a stable way, in order to correct errors caused by measuring the linear shape of the pipeline by means of the gyroscope thereby to realize a correct measurement of the linear shape of the pipeline and a method therefor, and to provide an apparatus for measuring the shape of the pipeline that measures the cross-sectional shape of the pipeline at positions along the pipeline and a method therefor.

**Summary of the Invention**

A first means for achieving the above-mentioned object is an apparatus for measuring the shape of a pipeline that travels in the pipeline and measures the shape of the pipeline. And the apparatus provides the following;

1) a pig body:
2) a three-axis gyroscope sensor unit fixed in the pig body:
3) distance measuring means that measures a distance between the pig body and an inside surface of the pipeline and including a plural sets of sensor units located at predetermined intervals in a traveling direction of the pig body, wherein a set of sensor unit includes at least three pieces of sensors at equal intervals in the circumferential direction of the pig body;
4) traveling distance measuring means for measuring a traveling distance in the pipeline of the apparatus; and
5) recording means for recording a result measured by the gyroscope sensor unit, a result measured by the distance measuring means, and a result measured by the traveling distance measuring means, wherein the distance measuring means is a contact type distance measuring means having a mechanism that is mounted on the pig body and always keeps contact with the inside surface of the pipeline.

In the present means, the distance measuring means is the contact type distance measuring means having the mechanism that is mounted on the pig body and always keeps contact with the inside surface of the pipeline. Therefore, it does not raise a problem caused in a case where an optical wave distance measuring unit, an ultrasonic distance measuring unit, or an eddy current type distance measuring unit is used, but can correctly detect the orientation of the pig body in the pipeline. Thus, by detecting the correct orientation of the pig body, it is possible to measure the direction of the centerline of the pipeline in combination with the output of the gyroscope sensor. Consequently, by combining the measured direction of the pipeline with the output of the traveling distance measuring means, it becomes possible to measure the linear shape of the pipeline with accuracy. Moreover, it becomes possible to measure the cross-sectional shape of the pipeline by the output of the distance measuring means.

A second means for achieving the object described above is the first means characterized in that the contact type distance measuring means includes: a rod (arm), one end of which is connected to a pivot shaft mounted on the outer surface of the pig body; a mechanism for applying a force to the rod (arm) such that the other end of the rod (arm) is always expanded in the radial direction of the pig body (in the direction that faces inside the pipeline) ; and a mechanism for measuring the rotational angle of the rod (arm) around the pivot shaft.

In the present means, the other end of the rod (arm) is always expanded in the direction that faces inside the pipeline and hence is put into contact with the inside surface of the pipeline. Thus, if the rotational angle around the pivot shaft of the rod (arm) is measured in this state, it becomes possible to correctly detect a distance between the pig body and the inside surface of the pipeline.

A third means for achieving the object is the second means characterized in that the mechanism for measuring the rotational angle of the rod (arm) around the pivot shaft is an electromagnetic induction type sleeve sensor connected

EP 1 362 979 A2

to the rod (arm).

A method of directly measuring the rotational angle of the pivot shaft by means of a rotary encoder is also considered to be the method of detecting the rotational angle around the pivot shaft of the rod. However, this method is thought to be unable to provide necessary accuracy because of the accuracy of the mechanical parts and like and will make the mechanism larger. Therefore, in the present means, the electromagnetic induction type sleeve sensor connected to the rod detects the rotation around the pivot shaft of the rod.

In other words, a rotational motion is transformed into a linear motion and measured as a displacement in the linear motion. This can makes it possible to measure an angle with high accuracy. The electromagnetic induction type sleeve sensor measures the position of a sleeve (metal cylinder) moving on a straight line with respect to a coil and has a simple structure, accuracy and stability as a sensor for measuring a displacement in the linear motion. Moreover, this measuring part is mounted on the outside surface of the pig body and hence needs not to be affected by fluid (gas, petroleum or the like) in the pipeline. The electromagnetic induction type sleeve sensor is excellent also in this point because it is little affected by the fluid and its temperature.

A fourth means for achieving the object is the second means characterized in that the other end of the rod (arm) has a wheel.

In the present means, the distance measuring means is put into contact with the inside surface of the pipeline via the wheel. Thus, it is possible to reduce a possibility that the mechanical parts of the distance measuring means will be worn or damaged.

A fifth means for achieving the object is the fourth means characterized in that the contact type distance measuring means has a mechanism for holding the pig body in the pipeline.

Usually, in case that the inspection pig receives the pressure of the fluid flowing in the pipeline, being traveled in the pipeline, it uses a sealing cup for receiving the pressure. And the body of the inspection pig is held by the sealing cup so as to keep a predetermined position with respect to the pipe. Thus, the present means is especially effective in case that a self-propelled apparatus for measuring the shape of the pipeline that does not use this kind of sealing cup. Further, the present means is effective also in case that, because of some circumstances , it becomes impossible to provide the sealing cup with strength capable of bearing the self-weight of the apparatus for measuring the shape of the pipeline. Still further, the present means is effective also in case that a plurality of bodies are coupled to each other, one of them is a driving body with the sealing cup, and the other bodies are driven bodies supported by a unit other than the sealing cup. According to the present means, the mechanism part of the distance measuring means bears the self-weight of the apparatus for measuring the shape of the pipeline and supports the body in the pipeline. Thus , the present means does not need a special body holding unit in addition to the distance measuring means and hence can simplify the construction.

A sixth means for achieving the object is the fourth means or the fifth means characterized in that a function for measuring the travel distance of the pig body in provided by the use of the sensor for detecting the rotation of the wheel. In the present means, the mechanism part of the distance measuring means detects the rotation of the wheel provided on a part in contact with the inside surface of the pipeline to function as an odometer for measuring the travel distance of the pig body. Therefore, the present means eliminates the need for providing a special sensor mechanism for the distance measuring means and thus simplifies the construction correspondingly.

A seventh means for achieving the object is any one of the first means to the sixth means characterized by a circumferential welded portion detecting means for detecting the circumferential welded portion of the pipeline.

Various types of devices such as an odometer are considered as the traveling distance measuring means. However, it is inevitable that any one of them accumulates errors while it travels a long distance and finally causes a large error. On the other hand, in the pipeline, when the pipeline is constructed, the lengths of the respective pipes constituting the pipeline are measured and stored as design specifications. Therefore, by detecting the circumferential welded portion of the pipeline, it is possible to correct the measurement errors of the traveling distance measuring means and hence to calculate a correct travel distance.

An eighth means for achieving the object is the seventh means characterized in that the circumferential welded portion detecting means has a function of detecting the circumferential welded portion of the pipeline based on the output of the distance measuring means.

An inside bead is formed on the circumferential welded portion. Thus, when the distance measuring means measures the distance between the body and the inside wall of the pipeline, it detects an abrupt change in the measured distance when it passes the inside bead. In particular, in case that the measurement results of the distance measuring means provided at the same position decrease by on the order of 1 to 2 mm at the same time, it becomes possible to determine that the distance measuring means pass a convex portion (bead portion) at a welded seam of the pipe. Thus , by detecting this change in the measured distance, it is possible to detect the circumferential welded portion. According to the present means, it is possible to detect the circumferential welded portion by the use of the distance measuring means and to eliminate the need for separately providing the circumferential welded portion detecting

4

means.

A ninth means for achieving the object is the seventh means or the eight means characterized in that the traveling distance measuring means has a function of correcting the measurement results based on the output of the circumferential welded portion detecting means.

In the present means, the traveling distance measuring means itself has the function of correcting the measurement results based on the output of the circumferential welded portion detecting means. Thus, the present means provides a correct travel distance as its output.

A tenth means for achieving the object is the seventh means or the eight means characterized in that the recording means records the output of the circumferential welded portion detecting means.

In the present means, the detection result of the circumferential welded portion is recorded in the recording means. Thus, the present means can correct the output of the traveling distance measuring means by the detection result of the circumferential welded portion at a later stage of analyzing data.

An eleventh means for achieving the object is any one of the first means to the tenth means characterized by further including a calculating unit for calculating the linear shape of the pipeline from measured data and recording means for recording at least the calculated linear shape of the pipeline in place of the recording means for recording the measurement result of the gyroscope sensor unit, the measurement result of the distance measuring means, and the measurement result of the traveling distance measuring means.

In the present means, the measurement of the linear shape of the pipeline can be performed while the inspection apparatus travels in the pipeline. Thus, the present means eliminates the need for offline calculating the linear shape reformed later and hence is efficient.

A twelfth means for achieving the object is any one of the first means to the eleventh means characterized by further including orientation change preventing means that is mounted at the appropriate position of the outer surface of the pig body and prevents an extreme orientation change of the pig body, with respect to the pipeline, that is caused when the pig body passes over the bend of the pipeline.

In the present means, when the pig body passes over the bend of the pipeline, the orientation change preventing means mounted at the appropriate position of the outer surface of the pig body prevents the extreme orientation change of the pig body with respect to the pipeline. With this means, it is possible to prevent the pig body from contacting the inside surface of the pipe and to keep the contact of the contact type distance measuring means with inside surface of the pipe.

A thirteenth means for achieving the object is the twelfth means characterized in that the orientation change preventing means is a disc that is made of a soft material and mounted on the pig body and has a diameter smaller than the inside diameter of the pipe of the pipeline.

In the present means, when the pig body passes the bend, the disc that is made of the soft material and mounted on the pig body contacts the inside surface of the pipe of the pipeline to prevent the orientation of the pig body with respect to the pipe from being extremely changed thereby to prevent the pig body from contacting with the inside surface of the pipe. The disc is made of the soft material such as resin and is easily deformed, so that the disc does not reduce the pig body's ability of passing the bend.

A fourteenth means for achieving the object is the twelfth means characterized in that the position change preventing means has a position holding member mounted on the pig body and shaped like a sealing cup.

In the present means, when the pig body passes the bend, the position holding member mounted on the pig body and shaped like the sealing cup contacts the inside surface of the pipe and prevents the orientation of the pig body with respect to the pipe from being extremely changed thereby to prevent the pig body from contacting the inside surface of the pipe. The position holding member shaped like the sealing cup is easily deformed, so that the disc does not reduce the pig body's ability of passing the bend.

A fifteenth means for achieving the object is a method for measuring the shape of the pipeline by traveling in the pipeline by the use of the apparatus as described in any one of the first means to the fourteenth means and characterized by calculating the linear shape of the pipeline from necessary data among data recorded in the recording means.

According to the present means, it is possible to perform a correct measurement of the linear shape of the pipeline.

A sixteenth means for achieving the object is a method for measuring the shape of the pipeline by traveling in the pipeline by use of the apparatus as described in any one of the first means to the fourteenth means and characterized by calculating the inside cross-sectional shape of the pipeline at respective position from necessary data among data recorded in the recording means.

According to the present means, it is possible to perform a correct measurement of the inside cross-sectional shape of the pipeline at respective positions.

**Brief Description of the Drawings**

Fig. 1 schematically shows an apparatus for measuring a shape of a pipeline that is one embodiment of the invention.
Fig. 2 shows in detail an example of distance measuring means.
Fig. 3 shows a principle of a measurement of a linear shape of the pipeline in the embodiment of the invention.
Fig. 4 shows a method of calculating a displacement between a pig center axis and a pipeline center axis.

**Description of the Preferred Embodiments**

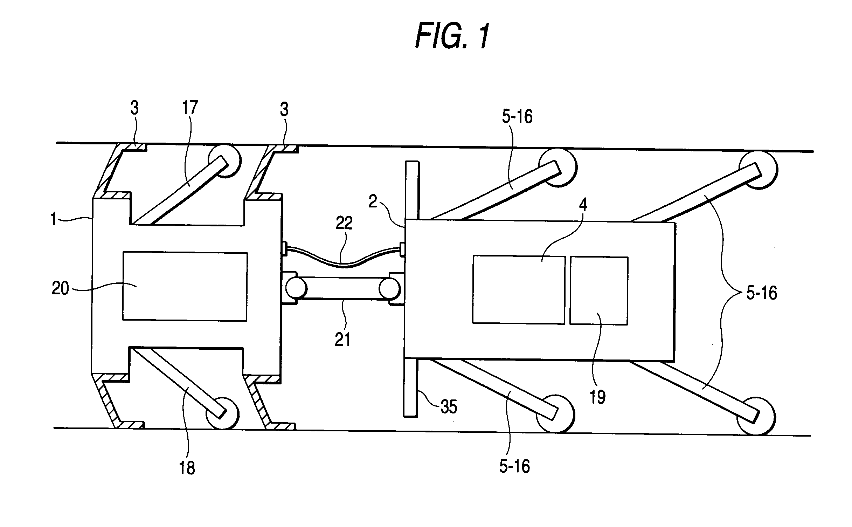

The preferred embodiments of the invention will be described with reference to the drawings. Fig. 1 schematically shows an apparatus for measuring a shape of a pipeline that is one embodiment of the invention.

In Fig. 1, sealing cups 3 are provided on the outer periphery of a pig body 1. When the pig body 1 is inserted into a pipeline, the outer periphery of each sealing cup 3 is put into close contact with the inside surface of the pipe. And a force for driving the pig body 1 is generated by a pressure difference before and behind the sealing cup 3 to drive the pig body 1 in the pipe. The sealing cups 3 are provided at two positions of the pig body 1. If the sealing cup 3 is provided at one position, there is a possibility that the deformation of the sealing cup 3 will produce a gap between the sealing cup 3 and the inside surface of the pipe, when the pig body 1 travels. The possibility will interfere with smooth travel of the pig body 1. Thus, in order to eliminate this possibility, there are provided two sealing cups 3.

A disc 35 made of resin and having an outside diameter smaller than the inside diameter of the pipe of the pipeline is mounted on the front of the pig body 2. This disc 35 prevents the orientation of the pig body 2 with respect to the pipe from being extremely changed when the pig body 2 passes a bend.

While the disc 35 is mounted only on the front of the pig body 2 in the embodiment shown in Fig. 1, the disc 35 can also be mounted on the rear of the pig body 2. Moreover, while the disc 35 having the diameter smaller than the inside diameter of the pipe is used in the embodiment shown in Fig. 1, a sealing cup can be used, in place of the disc, that is similar to the sealing cup 3 mounted on the pig body 1. In this case, it is desirable that the outside diameter of the sealing cup is made to be a little smaller than the inside diameter of the pipe, to make a gap between the sealing cup and the pipe. At the same time, it is desirable that a hole is made to be in the sealing cup to an extent that does not reduce its strength thereby, to prevent the sealing cup from producing a larger propelling force. Without this hole, there happens a possibility that a large propelling force, which is different from the pulling force of the pig body 1, will be applied on the pig body 2 to impair the smooth travel of the pig body 2.

Traveling distance-measuring means 17, 18 are mounted on the outside of the pig body 1. The traveling distance measuring means 17 (18) is a rod having a pivot shaft on the outside surface of the pig body 2. The traveling distance measuring means has a wheel on its other end and has a mechanism in which the wheel at the tip of the rod is always in contact with the inside surface of the pipeline. The wheel at the tip rotates when the pig body 1 travels in the pipeline. Thus, measuring the number of revolutions of the wheel makes it possible to calculate the traveling distance of the pig body 1 from the outer peripheral length of the wheel.

In this embodiment, two pieces of traveling distance-measuring means (17, 18) are mounted at opposite positions. This is because when the traveling distance measuring means passes the bend, travel distance measured by two traveling distance measuring means are different from each other, depending on the contact positions of the wheels in the circumferential direction of the pipe (depending on an inside position or an outside position in the bend of the pipe), so that the measured different travel distances are averaged to calculate the travel distance of the pig body. It is also possible to increase the number of traveling distance-measuring means, so as to improve accuracy to a further degree. The measured values of the traveling distance measuring means are sent via a cable 22 to a signal processing and recording unit 19 mounted in the pig body 2 and recorded.

A battery 20 in the pig body 1 supplies an electric power to the traveling distance measuring means 17, 18 and also supplies the electric power via the cable 22 to units mounted in the pig body 2.

The pig body 2 is connected via a connection part 21 to the pig body 1 and, when the pig body 1 is driven, travels in the pipe in cooperation with the pig body 1. Here, while the pig body 1 is separated from the pig body 2 for the purpose of ensuring the pig body to smoothly pass the bend in the pipeline (in order to prevent the body from contacting the inside surface of the pipe). In this case, merely one piece of pig body 1 can be provided, if conditions are permitted, which are determined by the inside diameter of the pipe and the radius of curvature of the bend.

A three-axis gyroscope sensor unit 4 is placed in the pig body 2 such that one measuring axis of the gyroscope sensor unit is parallel to the center axis of the pig body 2 and is fixed in such a way that the gyroscope sensor unit is not shifted in relative position from the pig body 2 when the pig body 2 travels. Two sets of six direction distance measuring means 5-10 and 11-16 are mounted on the outer periphery of the pig body 2 at two positions in the back and forth direction (in the traveling direction). Here, at the same time, the six distances measuring means of each set are located at equal intervals in a circumferential direction. In this respect, the distance measuring means 5-10 and 11-16 are called sensor units of distance measuring means in the claims, but for the sake of convenience of description, the sensor unit is called distance measuring means.

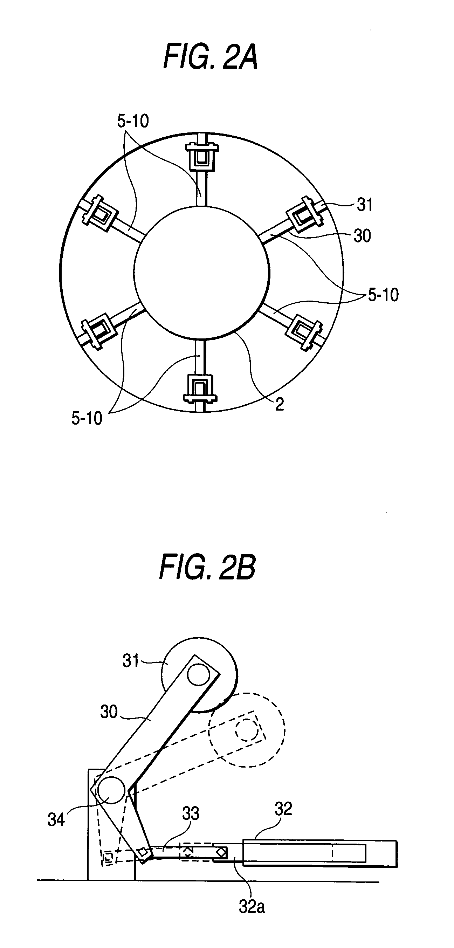

In Fig. 2, an example of the distance measuring means will be described in detail. In Fig. 2, the same reference number as shown in Fig. 1, which denotes the same constituent elements and their descriptions, will be omitted. In Fig. 2, a reference numeral 30 denotes a rod, 31 denotes a contact wheel, 32 denotes an electromagnetic induction type sleeve sensor, 33 denotes a linkage for connecting the sleeve sensor 32 to the rod 30, and 34 denotes a pivot shaft of the rod 30.

Fig. 2A is a schematic view of the distance measuring means 5-10, when viewed from the front. As shown in the drawing, the distance measuring means 5-10 are arranged at intervals of 60° in the circumferential direction of the pig body 2 and the contact wheels 31 mounted on the tips of the rods 30 are in contact with the inside peripheral surface of the pipeline.

Fig. 2 schematically shows the mechanism of each distance measuring means. The distance measuring means has the contact wheel 31 that is mounted on the tip of the rod 30 and contacts the inside surface of the pipe and rotates around the pivot shaft 34 on the pig body side. Moreover, the linkage 33 is coupled to one end of the rod 30 and the rotation of the rod 30 is transmitted to the sensor rod 32a of the electromagnetic sleeve sensor 32 via the linkage 33.

When a distance between the center axis of the pig body 2 and the inside surface of the pipeline changes and thus the rod 30 turns around the pivot shaft 34, a turning motion is transformed to a linear motion by the linkage 33 to move the sensor rod 32a in the sensor sleeve of the electromagnetic induction type sleeve sensor 32. As a result, the outputs of the electromagnetic induction sleeve sensor 32 change in response to a change in the distance (change in the angle of rod). Thus, it is possible to calculate the turning angle of the rod 30 from the output value of the electromagnetic induction type sleeve sensor 32.

Although not shown, a force is always applied to the rod 30 by a spring or the like such that the rod 30 is expanded in the inside peripheral direction of the pipeline. This applied force is also used for holding the position of the pig body 2 in the pipeline. Fig.2B shows one example of configuration of the distance measuring means and another configuration including the rod and sleeve sensor can also be used.

The respective measured data of the three-axis gyroscope sensor unit 4, the traveling distance measuring means 17, 18, the distance measuring means 5-16 are inputted to the signal processing and recording device 19. In the present embodiment, the data is recorded and stored at a predetermined period in the signal processing and recording device 19 and the stored data is read after the pig body finishes traveling and the calculation of the linear shape of the pipeline is performed from the stored data. However, it is also possible for the signal-processing device to perform the calculation of the linear shape of the pipeline in real time and to record the data of the linear shape in the recording device.

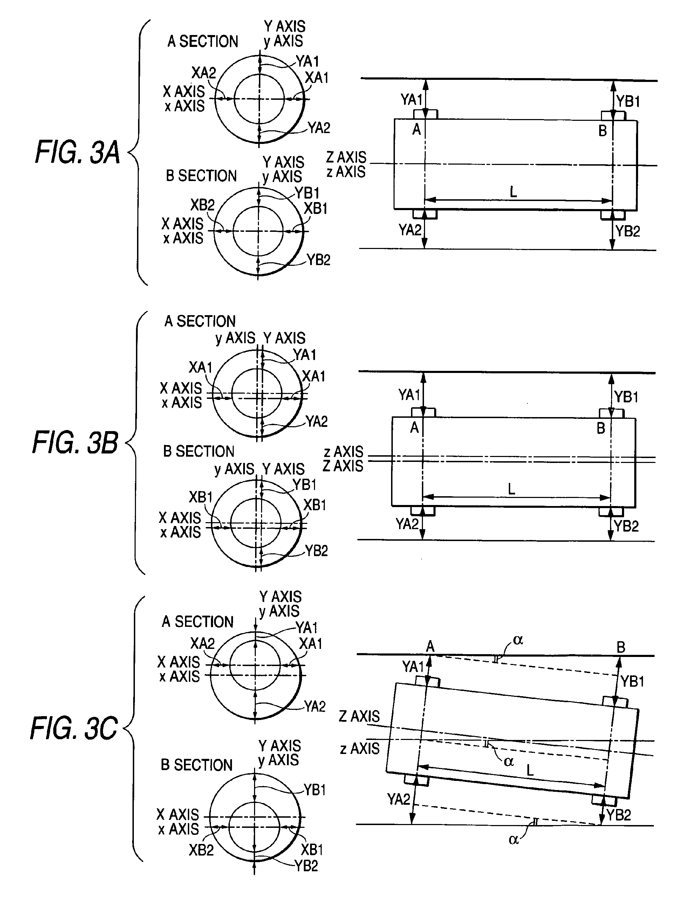

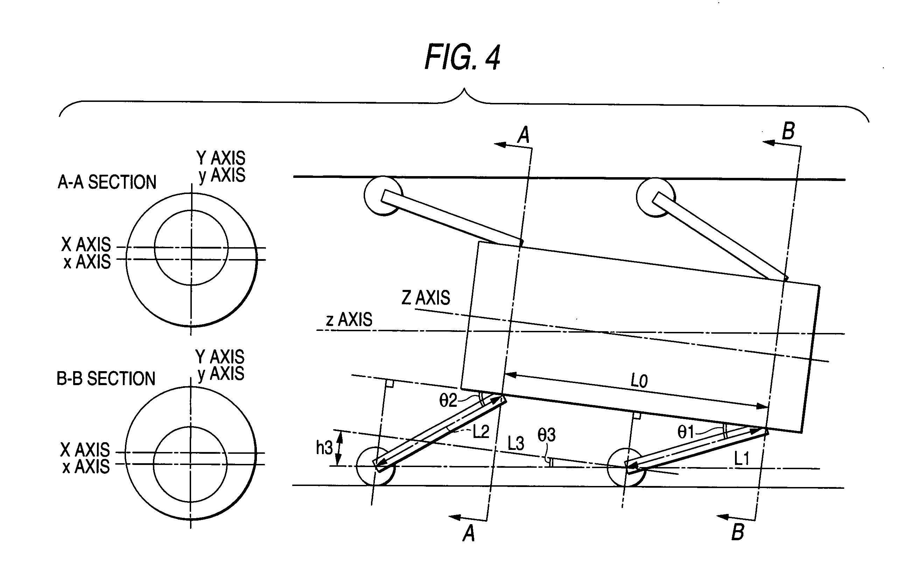

A principle of the measurement of the linear shape of the pipeline in the embodiment of the invention will be described with reference to Fig. 3 and Fig. 4. In the example shown in Fig. 3, assume that two sets of four distance measuring means are provided at each of positions A and B, the position A being away from the position B by a distance L in the direction of travel of the pig body, and that the four distance measuring means of each set are arranged in four directions perpendicular to each other in the circumferential direction, so that there are provided a total of eight distance measuring means. Further, assume that a center axis in the direction of travel of the gyroscope sensor (pig body) is Z-axis and that the directions of measurement of the distance measuring means in a cross section perpendicular to the direction of travel are X-axis and Y-axis.

Then, assume that measured distances to the inside surface of the pipe measured by the respective distance measuring means are XA1, XA2, YA1, YA2, XB1 XB2, YB1, and YB2. Moreover, assume that the respective distance measuring means are arranged at equal distances from the Z-axis (center axis) of the pig body. Here, assume that the direction of length (center axis) of the pipe is the z-axis, a vertical direction in the cross section of the pipe is y-axis, and a horizontal direction in the cross section of the pipe is x-axis. Then, for the sake of simplification, assume that the direction of the X-axis agrees with that of the x-axis and the direction of the Y-axis agrees with that of the y-axis (in case that the direction of the X-axis or the Y-axis does not agree with the direction of the x-axis or the y-axis, let the x-axis be in the direction of the X-axis and let the y-axis be in the direction of the Y-axis.)

As shown in Fig.3A, in case that the results of measured distance, being measured during traveling, by the distance measuring means are equal to each other (XA1 = XA2 = YA1 = YA2 = XB1 = XB2 = YB1 = YB2), the Z-axis of the pig body agrees with the z-axis of the pipe and thus it can be determined that the pig body travels in the center of the pipe.

Furthermore, in case that the four results of the distance measured in each cross section (A cross section and B cross section) are different respectively, it can be determined that the Z-axis of the pig body is shifted from the z-axis of the pipe in the A cross section or the B cross section. But as shown in Fig. 3B, in case that the measured results of the distance by the distance measuring means in the same directions in the A cross section and in the B cross section are equal to each other (XA1 = XB1, YA1 = YB1, XA2 = XB2, YA2 = YB2), it can be determined that the Z-axis of the pig body is parallel to the z-axis of the pipe and the whole pig body is eccentrically arranged in the pipe.

As shown in Fig.3C, in case that the measured results of the opposite distance in the direction of the X-axis are equal to each other (XA1 = XA2, XB1 = XB2) and the measured results of the distance in the direction of the Y-axis are different from each other (YA1 ≠ YA2, YB1 ≠ YB2, YA1 ≠ YB1, YA2 ≠ YB2) , it can be determined that the pig body is in a state where it is rotating around the X-axis of the pig body and at that time, a rotational angle $\alpha x$ (formed by the Z-axis and the z-axis) is expressed by the following equation.

(Mathematical equation 1)

$$\alpha x = \tan^{-1} \text{ (deviation of center of pig body from center of pipe}$$

$$\text{at point A and point B)/ (distance between point A and}$$

$$\text{point B)}$$

$$= \tan^{-1} ((YA1 - YB1))/ L) = \tan^{-1} ((YA2 - YB2)/ L)$$

At this time, the pig body travels in the pipe in a position in which the center axis (Z-axis) of the pig body and the center axis (z-axis) of the pipe is tilted (rotated) at an angle of $\alpha x$ around the X-axis. When the travel of the pig body is viewed from the coordinate system of the pipe (x-y-z coordinate system), the pig body travels along the z-axis, but when viewed from the coordinate system of the pig body (three-axis gyroscope sensor unit) (X-Y-Z coordinate system), the pig body travels in the direction of not only the Z-axis but also the Y-axis.

At this time , the traveling distance in the Z-Y coordinates of the pig body can be calculated from the traveling distance of the pig body along the z-axis (pipe). Moreover, the gyroscope sensor of the pig body can measure the direction of its own coordinate system with respect to an absolute coordinate system (earth coordinate system). Thus, by combining the measured results by the gyroscope sensor with the measured results of the position (tilt) of the pig body, it becomes possible to determine which direction the pig body (gyroscope sensor) travels with respect to the earth coordinate system. Moreover, by combining the measured results of the gyroscope sensor and the measured results of the position (tilt) of the pig body with the travel distance, it becomes possible to calculate a travel path of the pig body in the earth coordinate system, that is, the linear shape of the pipeline.

Furthermore, in case that the measured results of the opposite distance in the direction of the Y-axis are equal to each other (YA1 = YA2, YB1 = YB2) and the measured results of the opposite distance in the direction of the X-axis are different from each other (XA1 ≠ XA2, XB1 ≠ XB2, XA1 ≠ XB1, XA2 ≠ XB2), it can be determined that the pig body is in a state where it rotating around the Y-axis of the pig body and at that time, a rotational angle $\alpha y$ (formed by the Z-axis and the z-axis) is expressed by the following equation.

(Mathematical equation 2)

$$\alpha y = \tan^{-1} \text{ (deviation of center of pig from center of pipe}$$

$$\text{at point A and point B)/ (distance between point A and}$$

$$\text{point B)}$$

$$= \tan^{-1} ((XA1 - XB1))/ L) = \tan^{-1} ((XA2 - XB2)/ L)$$

In the actual travel of the pig body, there is a possibility that the center axis (Z-axis) of the pig body and the center axis (z-axis) of the pipe will tilt (rotate) around an arbitrary axis in the X-Y plane. In this case, all of the pair of distance measurement results in the directions of the X-axis and the Y-axis is different from each other. Then, by determining the tilts $\alpha x$, $\alpha y$ around the X-axis and the Y-axis from these distance measurement results, it is possible to determine the tilt of the pig body. Here, the angle formed by the Z-axis and the z-axis is expressed by the following equation.

(Mathematical equation 3)

$$\alpha = \tan^{-1} \text{ (deviation of center of pig from center of pipe at}$$

$$\text{point A and point B)/ (distance between point A and point B)}$$

$$= \tan^{-1} (((YA1 - YB1)^2 + (XA1 - XB1)^2)^{-1/2} / L)$$

In the embodiment shown in Fig. 1, two sets of six pieces of distance measuring means are used, which are arranged on the circumference of the pig body 2. In this case, it is recommended that the rectangular coordinate system (X-Y-Z coordinate system) at the point A or the point B is determined and that a positional relationship between the center of the pig body and the center of the pipeline is determined from the measurement results at the six points.

In Fig. 3, the distance measuring means for measuring the distance to the inside surface of the pipe are arranged on the outer periphery of the pig body in four directions perpendicular to each other. However, if three or more distance measuring means are provided at equal intervals in the circumferential direction, it is possible to calculate the angle of the center axis of the pig body with respect to the center axis of the pipe.

A method of measuring a deviation in angle of the center axis of the pig body from the center axis of the pipeline by the use of the distance measuring means shown in Fig. 2 will be shown in Fig. 4.

Let the length of a first rod be L1, the length of a second rod be L2, a distance between the pivot shafts on the pig body side of the first rod and the second rod be L0, and angles of the rods with respect to the pig body (center axis) be $\theta 1$ and $\theta 2$. At this time, assuming that the wheels on the tips of the first rod and the second rod are in contact with the inside surface of the pipe, respectively, a straight line connecting the center axes of the two wheels is parallel to the inside surface of the pipe. Therefore, if the positions of the respective wheels with respect to the pig body are found, it is possible to determine the angle of the pipe with respect to the pig body.

The angle $\theta 3$ formed by the center axis of the pig body and the inside surface of the pipe (rotational angle of the pig body with respect to the center axis of the pipe) is expressed by the following equation.

(Mathematical equation 4)

$$\theta 3 = \tan^{-1} (h3 / L3)$$

$$L3 = L0 - L1 \cos (\theta 1) + L2 \cos (\theta 2)$$

$$h3 = L2 \sin (\theta 2) - L1 \sin (\theta 1)$$

Similarly, it is possible to calculate the rotational angle of the pig body with respect to the center axis of the pipe also for a third rod and a fourth rod.

Here, while it is assumed that the rotational plane of the pig body and the distance measuring means to the inside surface of the pipe are on the same plane, if three or more distance measuring means are arranged at equal intervals in the circumferential direction, it is possible to calculate the orientation of the pig body with respect to the pipe.

As described above, according to the invention, it is possible to provide an apparatus and a method for measuring the shape of a pipeline in which the orientation of the pig body in the pipe of the pipeline can, surely, be in a stable way, measured to correct errors arising in the measurement of the linear shape of the pipeline by the use of the gyroscope thereby to realize a correct measurement of the linear shape of the pipeline, and an apparatus and a method for measuring the sectional shape of the pipeline at positions of the pipeline.

**Claims**

1.   An apparatus for measuring a shape of a pipeline by traveling in the pipeline comprising:

a pig body:

a three-axis gyroscope sensor unit fixed in the pig body:

distance measuring means measuring a distance between the pig body and an inside surface of the pipeline and including a plural sets of sensor units located at predetermined intervals in a traveling direction of the pig body, wherein a set of the sensor unit includes at least three pieces of sensors at equal intervals in a circumferential direction of the pig body;

traveling distance measuring means for measuring a traveling distance in the pipeline of the apparatus; and

recording means for recording a result measured by the gyroscope sensor unit, a result measured by the distance measuring means , and a result measured by the traveling distance measuring means, wherein the distance measuring means is a contact type distance measuring means having a mechanism mounting on the pig body and always keeps contact with the inside surface of the pipeline.

2. The apparatus according to claim 1, wherein the contact type distance measuring means comprises:

a rod, one end of which is connected to a pivot shaft mounted on an outer surface of the pig body;

a mechanism for applying a force to the rod for an other end of the rod to be always expanded in a radial direction of the pig body; and

a mechanism for measuring a rotational angle of the rod around the pivot shaft.

3. The apparatus according to claim 2, wherein the mechanism for measuring a rotational angle of the rod around the pivot shaft is an electromagnetic induction type sleeve sensor connected to the rod.

4. The apparatus according to claim 2, wherein the other end of the rod has a wheel.

5. The apparatus according to claim 4, wherein the contact type distance measuring means comprises a mechanism for holding the pig body.

6. The apparatus according to claim 4, further comprising a function of measuring a traveling distance of the pig body by locating a sensor for detecting rotation of the wheel.

7. The apparatus according to claim 5, further comprising a sensor for detecting rotation of the wheel and a function for measuring a traveling distance of the pig body.

8. The apparatus according to claim 1, further comprising circumferential welded portion-detecting means for detecting a circumferential welded portion of the pipeline.

9. The apparatus according to claim 7, further comprising circumferential welded portion detecting means having a function of detecting a circumferential welded portion of the pipeline based on an output of the distance measuring means.

10. The apparatus according to claim 8, wherein the traveling distance measuring means has a function of correcting measurement results based on an output of the circumferential welded portion detecting means.

11. The apparatus according to claim 1, further comprising:

a calculating unit for calculating a linear shape of the pipeline from measured data; and

recording means for recording at least a calculated linear shape of the pipeline in place of the recording means for recording the result measured by the gyroscope sensor unit, the result measured by the distance measuring means, and the result measured by the traveling distance measuring means.

12. The apparatus according to claim 1, further comprising orientation change preventing means, mounted at an appropriate position of an outer periphery of the pig body, and preventing an extreme orientation change of the pig body with respect to the pipeline caused when the pig body passes over a bend of the pipeline.

13. The apparatus according to claim 12, wherein the orientation change preventing means is a disc that is made of a soft material and mounted on the pig body and has a diameter smaller than an inside diameter of the pipe of the pipeline.

14. The apparatus according to claim 12, wherein the position change preventing means has a position holding member mounted on the pig body and shaped like a sealing cup.

**15.** A method for measuring a shape of a pipeline by traveling in the pipeline by use of the apparatus as described in any one of claims 1 to 14, the method comprising a step of calculating a linear shape of the pipeline from necessary data among data recorded in the recording means.

**16.** A method for measuring a shape of a pipeline by use of the apparatus as claimed in any one of claims 1 to 14, the method further comprising a step of calculating an inside cross-sectional shape of the pipeline at each position from necessary data among data recorded in the recording means.

*FIG. 1*

# FIG. 2A

# FIG. 2B

FIG. 3A

FIG. 3B

FIG. 3C

FIG. 4